# EUROPEAN PATENT APPLICATION

(11) **EP 4 574 515 A1**
(43) Date of publication of application: **25.06.2025**
(21) Application number: 24220239.8
(22) Date of filing: 16.12.2024
(51) Int. Cl.: B60L 1/00, H02J 50/00, H02J 50/20

(54) **SYSTEM AND METHOD OF ENERGY RECOVERY IN A MOTOR VEHICLE**

(30) Priority: 18.12.2023 IT 202300027009
(71) Applicant: FERRARI S.p.A., 41100 Modena (IT)
(72) Inventor: DI ZANNI, Gianluigi, 41100 MODENA (IT); NOVELLI, Lucia, 41100 MODENA (IT)
(74) Representative: Studio Torta S.p.A.

(57) **Abstract**

An energy harvesting system for a motor vehicle (1) is described, having a telematics control unit (10) designed to implement a wireless bidirectional data communication between the motor vehicle (1) and an external system through the cellular communication network. The telematics control unit (10) is designed to internally implement two separate paths starting from radio-frequency signals received through the cellular communication network: a communication path (10a) for data communication; and an energy path (10b) for energy harvesting based on a transformation of energy associated with the radio-frequency signals into harvested energy usable in the motor vehicle (1).

## Description

### CROSS-REFERENCE TO RELATED APPLICATIONS

This patent application claims priority from Italian patent application no. 102023000027009 filed on December 18, 2023, the entire disclosure of which is incorporated herein by reference.

### TECHNICAL FIELD

The present solution relates to an energy harvesting system and method in a vehicle, in particular in a motor vehicle.

In a known manner, "energy harvesting" is the process whereby energy coming from alternative sources (for example solar, thermal, wind, kinetic or of other nature) is captured and converted into directly usable or storable electric energy.

It is also known that in modern vehicles, in particular in battery-powered vehicles (electric or hybrid vehicles), the optimization of energy consumption from the battery represents an important design aspect.

In this regard, the battery, besides being used for the purpose of vehicle propulsion, typically powers a plurality of electronic systems on board the vehicle, among which for example a plurality of on-board sensors which are used for managing and controlling the operation of the same vehicle (such as accelerometers, gyroscopes, pressure sensors, temperature sensors, etc.) and furthermore the key of the vehicle.

### OBJECT OF THE INVENTION

The object of the present solution is in general to provide an energy harvesting system in a vehicle, in particular a motor vehicle, which allows reducing the energy consumption of the battery of the vehicle and in general improving the energy balance inside the vehicle.

In accordance with the objective indicated above, according to the present solution a system and a method are provided, as defined in the appended claims.

### BRIEF DESCRIPTION OF THE DRAWINGS

The present invention will now be described with reference to the accompanying drawings, which illustrate a non-limiting example embodiment thereof, wherein:
- Figure 1 schematically shows a motor vehicle equipped with an energy harvesting system according to an aspect of the present solution;
- Figure 2 is a schematic block diagram of the energy harvesting system;
- Figure 3 is a more detailed block diagram of the energy harvesting system; and
- Figure 4 is a block diagram of an alternative solution of a part of the energy harvesting system.

### DETAILED DESCRIPTION OF THE EMBODIMENTS

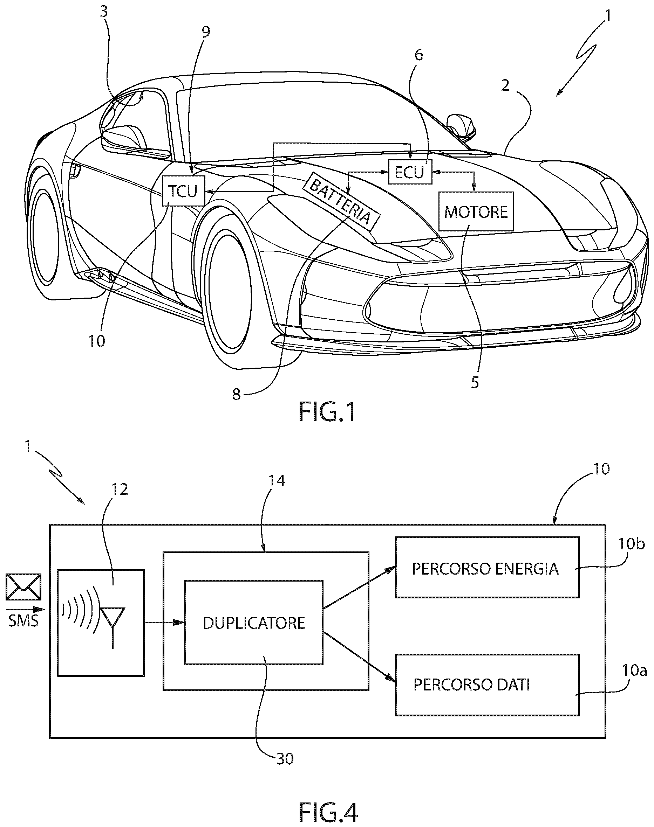

With reference to Figure 1, reference numeral 1 denotes, as a whole, a motor vehicle comprising a body 2 defining a passenger compartment 3 and housing a propulsion assembly (motor) 5, in particular of hybrid or electric type, the actuation of which is controlled, in a known manner, by an electronic control unit (ECU) 6, also designed to supervise the general operation of the motor vehicle 1. The motor vehicle 1 comprises, schematically illustrated in Figure 1, a battery 8, which powers in the example also the propulsion assembly 5, besides various on-board electronic systems.

According to an aspect of the present solution, the motor vehicle 1 further comprises an energy harvesting system 9 which includes a telematics control unit (TCU) 10 of the motor vehicle 1, configured to implement a wireless bidirectional information communication between the motor vehicle 1 and an external system, for example a central server or a cloud system, in particular through the use of the cellular network.

In a manner not described in detail herein, the telematics control unit 10 is in general configured to collect data from the motor vehicle 1, relating to its operation, such as location data (through a satellite location system, for example GPS), speed or acceleration data, consumption efficiency data, connectivity quality data and so forth, connecting to various subsystems of the vehicle through data and control buses, in particular connecting to the aforementioned electronic control unit 6.

The telematics control unit 10 is further configured to transmit the collected data to the external system, by means of wireless communication, in particular through the cellular network, using any known protocol, GSM, GPRS, UMTS, LTE or 5G (or any protocol which may be developed in the future).

In such manner, the data can be received and analysed by the external system and possibly be presented to final users, for example through safe websites and/or applications designed for smartphones, tablets or similar electronic devices.

Furthermore, the telematics control unit 10 can receive configuration and control messages from the external system, for example from the central server, or in general data packets such as for example software updates, maps, weather information, or the like.

The telematics control unit 10 may further be configured to implement an e-Call system, for transmitting information on the state and on the position of the motor vehicle 1 to an emergency centre in case of accident or other type of emergency.

The telematics control unit 10 typically comprises a cellular communication unit (or modem), integrating a SIM (Subscriber Identity Module) card, in particular an electronic or digital SIM card (e-SIM).

The telematics control unit 10 can further connect in wireless mode to other surrounding vehicles, for example through the V2X (Vehicle-to-Everything) technology standards.

As it will be discussed in detail, an aspect of the present solution provides for integrating inside the telematics control unit 10 of the motor vehicle 1 an energy harvesting function, designed to exploit energy associated with radio-frequency signals received from the outside, in particular associated with data packets received through the cellular network, converting it into an immediately exploitable energy inside the motor vehicle 1, for example for storing or for powering on-board systems (for example sensors).

In particular, inside the telematics control unit 10 two separate paths are implemented starting from the radio-frequency signals received from the outside: a communication path, for the usual data communication; and an energy path, for the additional function of energy harvesting.

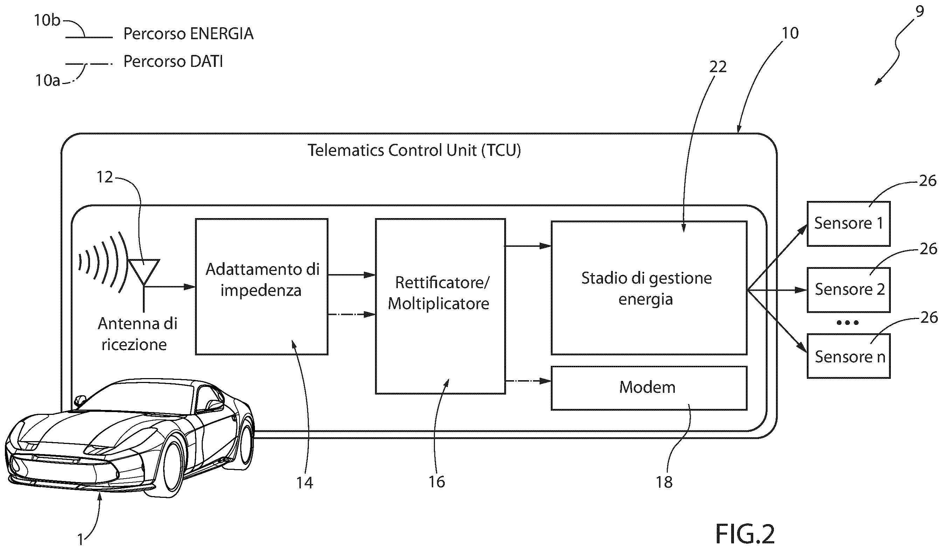

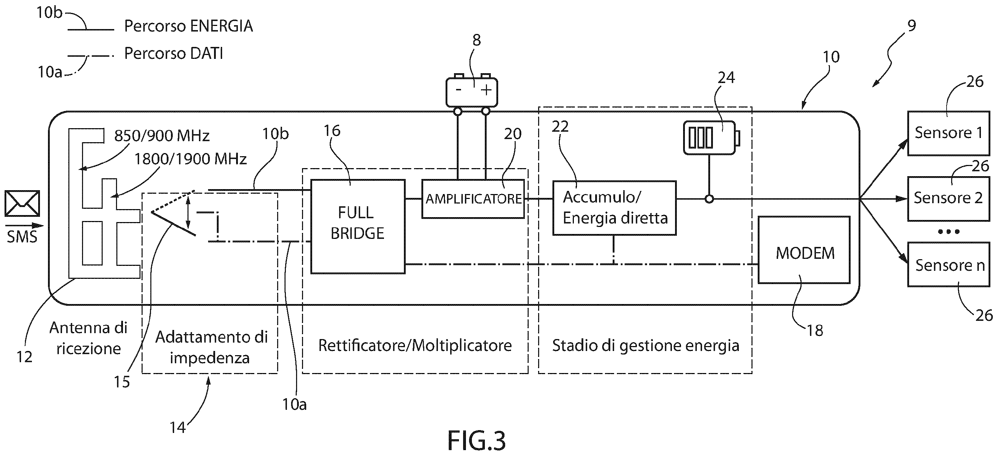

In detail, and referring to Figures 2 and 3, the aforementioned telematics control unit 10 of the energy harvesting system 9 comprises an antenna stage 12, configured to receive radio-frequency signals, in particular from the cellular or mobile network.

In a possible implementation, such antenna stage 12 implements an antenna of the "inverted F" type, configured to receive signals in the frequency bands 850-900 MHz and 1800-1900 MHz, proper for example of the LTE cellular networks.

The telematics control unit 10 comprises an input stage 14, coupled to the aforementioned antenna stage 12 and configured to perform a suitable impedance matching for the received radio-frequency signals.

In an embodiment (shown in the aforementioned Figure 3), the input stage 14 comprises a suitable switching element 15, configured to direct the radio-frequency signals received from the antenna stage 12 either towards the data communication path, indicated herein by 10a, or towards the energy path, indicated herein by 10b, inside the telematics control unit 10.

The telematics control unit 10 comprises a rectifier stage 16, for example of the "full bridge" type, configured to rectify the received signals; such rectifier stage 16 performs a conversion from radio-frequency energy to direct current (DC) energy.

The telematics control unit 10 comprises, in the aforementioned communication path 10a, a communication unit 18, or modem, configured to manage, in a manner known per se (not described in detail herein), the communication of data or control signals, in particular through the cellular network, managing in a suitable manner the information content of the received signals intended, for example, for the electronic control unit 6 of the motor vehicle 1.

The telematics control unit 10 further comprises, limitedly to the aforementioned energy path 10b: a multiplication or amplification stage 20, coupled to the aforementioned rectifier stage 16 and configured to suitably multiply or amplify the received and rectified signals, so as to amplify the energy content of the received and rectified signals for the provision of said harvested energy; and an energy management stage 22, configured to control and manage the energy harvesting function starting from the aforementioned radio-frequency signals.

In particular, such energy management stage 22 is configured to manage the storage of harvested energy in an integrated battery 24, for example internal to the same telematics control unit 10 (or in a different energy storage element, such as for example a supercapacitor); and/or (namely, in addition or alternatively) the direct use of the harvested energy for powering (for example, by means of a suitable output voltage) on-board electronic systems of the motor vehicle 1, in the example represented for powering a plurality of sensors 26 of the motor vehicle 1 (for example, accelerometer sensors, gyroscopes, pressure sensors, etc.). As indicated in the foregoing, the harvested energy can also be used for powering the key of the motor vehicle 1.

In particular, the aforementioned energy management stage 22 may comprise a processing unit, a microprocessor, microcontroller or similar digital processing unit, configured to implement a suitable energy management logic. Such management logic is implemented by a suitable software algorithm executed by the processing unit and stored, in the form of programming code, in a non-volatile memory (not illustrated herein) associated with the processing unit.

As is shown in the aforementioned Figure 3, the telematics control unit 10 may receive electric power from the battery 8 of the motor vehicle 1.

According to a particular aspect of the present solution, the telematics control unit 10 is configured to exploit, for the aforementioned energy harvesting function, data packets representative of SMS (Short Message Service) messages received from the cellular network.

In a per-se known manner, the SMS communications, typically called "text messages", allow exchanging text messages having the maximum length of 160 characters between mobile devices.

The SMS messages are transmitted from a sending device to a nearest base transceiver station (BTS) or "cell"; such cell transmits the SMSs, through the Base Station Controller (BSC) and the Mobile Switching Centre (MSC), to the Short Message Service Centre (SMSC); once the receiving device has been located through the Visitors Location Register (VLR) and the Equipment Identity Register (EIR), the SMS is sent to the nearest cell, to be received by the receiving device.

The input stage 14 of the telematics control unit 10 can thus be configured to detect a frequency or different or further features associated with the reception of SMS messages by the antenna stage 12 and consequently activate the switching element 15 for deviating the radio-frequency signals received by the antenna stage 12 towards the energy path 10b for the purpose of energy harvesting.

In a possible implementation, the telematics control unit 10 can be configured to receive a given configuration or control SMS message, following which subsequent SMS messages can be directed towards the energy path 10b for the energy harvesting function. Such subsequent SMS messages can in particular be specifically sent from the external system for the purpose of energy harvesting inside the motor vehicle 1.

In such case, the configuration SMS message can be received through the usual communication path 10a and suitably interpreted for the purpose of switching the switching element 15 towards the aforementioned energy path 10b, for example for a preset number of subsequently received SMS messages or up to the reception of a following configuration or control SMS message designed to determine the stop of the energy harvesting function.

Based on what discussed, the advantages that the present solution allows to achieve are evident.

In particular, it is underlined that the energy harvesting system implemented in the telematics control unit 10 of the motor vehicle 1 allows reducing the energy request by the battery of the motor vehicle 1, providing an additional energy source, exploitable for example for electrically powering sensors or other on-board systems of the motor vehicle 1 and/or for the storage in an internal battery or in different energy storage systems.

In general, such energy harvesting system allows improving the energy balance implemented in the motor vehicle 1.

The radio-frequency signals further represent a "clean" energy source, typically available in the environment of use of the motor vehicle 1. In particular, the use of SMS messages provides for exploiting wireless communication architectures typically universally available, without requiring the creation of dedicated communication networks or architectures.

The described solution thus proves to be simple and cost-effective to realize, not requiring in general modifications to the hardware of the motor vehicle 1 or to the external wireless communication network (in this case, the cellular network).

Finally, it is clear that modifications and variations can be made to what described without thereby departing from the scope of the present invention, as defined by the appended claims.

It is underlined in particular that the described solution can be advantageously applied also to vehicles that use a thermal engine for propulsion, allowing in any case a saving of the energy required from an associated service battery.

Furthermore, it is underlined that the input stage 14 of the telematics control unit 10 of the motor vehicle 1 could be configured to duplicate the energy received from the antenna stage 12 directing such energy simultaneously to both the communication and energy harvesting paths 10a, 10b.

In such case, as is schematically shown in Figure 4, such input stage 14, instead of a switching element 15, could comprise a suitable energy duplication element 30, coupled at the input to the antenna stage 12 and at the output to the aforementioned communication and energy harvesting paths 10a, 10b, for activating, in such case in parallel, both the decoding function of the received data and the energy harvesting function.

## Claims

1. An energy harvesting system for a motor vehicle (1), comprising a telematics control unit (10) of said motor vehicle (1) configured to implement a wireless bidirectional data communication between the motor vehicle (1) and an external system through a cellular communication network,
**characterized in that** said telematics control unit (10) is configured to internally implement two separate paths starting from radio-frequency signals received through said cellular communication network: a communication path (10a) for data communication; and an energy path (10b) for energy harvesting based on a transformation of energy associated with said radio-frequency signals into harvested energy usable in said motor vehicle (1).

2. The system according to claim 1, wherein said harvested energy is designed to be stored in an energy storage element (24) integrated in said motor vehicle (1) and/or to be directly used to power on-board electronic systems of the motor vehicle (1).

3. The system according to claim 2, wherein said on-board electronic systems include a plurality of sensors (26) of said motor vehicle (1).

4. The system according to any one of the preceding claims, wherein said telematics control unit (10) comprises: an antenna stage (12) configured to receive radio-frequency signals from the cellular network; and an input stage (14) coupled to the antenna stage (12) and configured to perform an impedance matching for the received radio-frequency signals; wherein said input stage (14) is further configured to direct said radio-frequency signals towards said energy path (10b) to implement said energy harvesting.

5. The system according to claim 4, wherein said input stage (14) comprises a switching element (15) configured to direct the radio-frequency signals received from the antenna stage (12) either towards the communication path (10a) or towards the energy path (10b) inside the telematics control unit (10).

6. The system according to claim 4 or 5, wherein said energy path (10b) comprises a rectifier stage (16) configured to rectify the received radio-frequency signals; a multiplication stage (20) coupled to the rectifier stage (16) and configured to amplify the energy content of the received and rectified signals for the provision of said harvested energy; and an energy management stage (22) coupled to the multiplication stage (20) and configured to control and manage energy harvesting based on said harvested energy.

7. The system according to claim 6, wherein said energy management stage (22) is configured to manage the storage of harvested energy in an energy storage element (24) and/or a direct use of the harvested energy to power on-board electronic systems of the motor vehicle (1).

8. The system according to any one of the preceding claims, wherein said communication path (10a) comprises a communication unit (18) configured to manage the data communication between the motor vehicle (1) and the external system through the cellular communication network.

9. The system according to any one of the preceding claims, configured to exploit, for energy harvesting, data packets representative of SMS (Short Message Service) messages received from the cellular communication network.

10. The system according to claim 9, wherein said telematics control unit (10) comprises an input stage (14) configured to: receive said radio-frequency signals; detect features of said radio-frequency signals associated with reception of SMS messages; and consequently direct said radio-frequency signals towards the energy path (10b) for the purpose of energy harvesting.

11. The system according to claim 9 or 10, wherein said telematics control unit (10) is configured to receive an SMS control message, following which subsequent SMS messages are directed towards the energy path (10b) for energy harvesting.

12. A motor vehicle (1), **characterized by** comprising the energy harvesting system according to any one of the preceding claims.

13. An energy harvesting method for a motor vehicle (1), comprising a telematics control unit (10) configured to implement a wireless bidirectional data communication between the motor vehicle (1) and an external system through the cellular communication network,
**characterized by** implementing, internally to said telematics control unit (10), two separate paths starting from radio-frequency signals received through said cellular communication network: a communication path (10a) for data communication; and an energy path (10b) for energy harvesting based on a transformation of energy associated with said radio-frequency signals into harvested energy usable in said motor vehicle (1).

14. The method according to claim 13, comprising storing said harvested energy in an energy storage element (24) integrated in said motor vehicle (1); and/or directly using said harvested energy to power on-board electronic systems of the motor vehicle (1).

15. The method according to claim 13 or 14, comprising exploiting, for energy harvesting, data packets representative of SMS (Short Message Service) messages received from the cellular network.
